# EUROPÄISCHE PATENTSCHRIFT

(11) **EP 3 867 134 B1**
(45) Veröffentlichungstag und Bekanntmachung des Hinweises auf die Patenterteilung: **21.06.2023**
(21) Anmeldenummer: 19765991.5
(22) Anmeldetag: 06.09.2019
(51) Int. Cl.: B62J 7/08, B62J 9/24, B62J 9/27, B62J 7/04

(54) **GEPÄCKBRÜCKE ZUR BEFESTIGENDEN AUFNAHME EINES MOTORRADGEPÄCKSTÜCKS**
LUGGAGE RACK FOR SECURING AN ITEM OF LUGGAGE ON A MOTORCYCLE
PORTE-BAGAGES SERVANT À RECEVOIR PAR FIXATION UN BAGAGE DE MOTOCYCLETTE

(30) Priorität: 16.10.2018 DE 102018125576
(43) Veröffentlichungstag der Anmeldung: 25.08.2021
(73) Patentinhaber: Bayerische Motoren Werke Aktiengesellschaft, 80809 München (DE)
(72) Erfinder: RAU, Jan, 85540 Haar (DE); SIEVERS-PAULSEN, Johann, 85354 Freising (DE); RIEGL, Andreas, 86316 Friedberg St Staetzling (DE); PAZULLA, Martin, 82515 Wolfratshausen (DE); KRYCH, Tim, 81825 München (DE)
(86) Internationale Anmeldenummer: PCT/EP2019/073832
(87) Internationale Veröffentlichungsnummer: WO 2020/078619

(56) Entgegenhaltungen:
- EP-A1- 1 473 216
- EP-A2- 1 634 801
- DE-A1-102009 039 017
- KR-Y1- 200 432 642
- US-A- 5 664 715

## Beschreibung

Die Erfindung betrifft eine Gepäckbrücke zur befestigenden Aufnahme eines Motorradgepäckstücks für ein Motorrad, Kraftrad oder einen Motorroller.

Im Stand der Technik werden Gepäckbrücken zur Aufnahme eines Motorradgepäckstücks an den Motorrädern oder Motorrollern verschraubt und sind fest an dem Fahrzeug fixiert.

Nachteilig daran ist aber, dass die Gepäckbrücke, falls diese nicht benötigt wird, mit zusätzlichem Werkzeug, das nicht dem Bordwerkzeug des Motorrads oder des Motorrollers entspricht, demontiert werden müssen. Dieser Umstand macht auf der einen Seite die Demontage der Gepäckbrücke sehr zeitaufwändig und auf der anderen Seite muss der Fahrer das zusätzliche Werkzeug mit sich führen, um die Gepäckbrücke demontieren zu können.

Druckschriftlicher Stand der Technik im vorliegenden technischen Gebiet, welcher den Oberbegriff des Anspruchs 1 widerspiegelt, ist in den Dokumenten EP 1 473 216 A1, EP 1 634 801 A2, US 5 664 715 A und DE 10 2009 039 017 A1 offenbart.

Es ist daher Aufgabe der vorliegenden Erfindung, eine Gepäckbrücke bereit zu stellen, die eine einfache und schnelle (De-)Montage, ohne neben dem Bordwerkzeug zusätzliches Werkzeug verwenden zu müssen, gewährleistet.

Diese Aufgabe wird durch die Merkmalskombination gemäß Patentanspruch 1 gelöst.

Erfindungsgemäß wird daher eine Gepäckbrücke zur befestigenden Aufnahme eines Motorradgepäckstücks für ein Motorrad oder einen Motorroller mit einer Adapterplatte vorgeschlagen, auf welcher das Motorradgepäckstück befestigbar ist und die zumindest ein Positionierungselement zur Positionsfestlegung und Vorfixierung der Gepäckbrücke an dem Motorrad oder Motorroller aufweist. Ferner umfasst die Gepäckbrücke eine Verschiebevorrichtung, die ein Eingriffselement und einen mit dem Eingriffselement zusammenwirkenden Hebel aufweist. Dabei ist der Hebel zwischen einer Öffnungsstellung und einer Schließstellung verstellbar und das Eingriffselement zwischen einer von dem Motorrad oder dem Motorroller gelösten und einer an dem Motorrad oder dem Motorroller befestigten Position verlagert.

Das Positionierungselement erleichtert dabei die Montage der Gepäckbrücke, da der Anwender lediglich mit dem Positionierungselement an dem dafür am Motorrad vorgesehenen Anlagepunkt ansetzen muss. Durch das Positionierungselement wird die Gepäckbrücke bei der weiteren Montage genau in die Montageendposition geführt. Ferner ist günstig, dass die Gepäckbrücke mittels der Verschiebevorrichtung an dem Motorrad oder Motorroller fixiert werden kann. Ein Umlegen des Hebels von der Öffnungsstellung zu der Schließstellung verschiebt das Eingriffselement zu der befestigenden Position, an welcher das Eingriffselement an einem Gegenstück derart eingreift, dass es zusammen mit dem Positionierungselement die Gepäckbrücke fest an dem Motorrad oder Motorroller fixiert. Wird der Hebel wieder in die Öffnungsstellung zurück versetzt, wird die Gepäckbrücke wieder von dem Motorrad oder Motorroller gelöst. Auf diese Weise ist die Gepäckbrücke schnell und ohne zusätzliches Werkzeug montierbar und demontierbar.

In einer vorteilhaften Ausführungsform der Erfindung ist vorgesehen, dass die Adapterplatte zumindest ein Einrastmittel aufweist, das in einer Längsrichtung, welche im bestimmungsgemäßen Gebrauch der Gepäckbrücke einer Fahrtrichtung bzw. der Hauptfahrtrichtung entspricht, von dem Positionierungselement beabstandet angeordnet ist. Ferner ist das zumindest eine Einrastmittel ausgebildet, mit einer korrespondierenden und an dem Motorrad oder Motorroller angeordneten Aufnahme zur Vorfixierung lösbar zu verrasten. Dies hat zur Folge, dass die Montage erheblich vereinfacht wird, da mittels der Vorfixierung sich die Gepäckbrücke bereits in ihrer Montageendposition befindet und nur durch eine hohe Kraftaufbringung davon gelöst werden kann. Somit löst sich die Gepäckbrücke während dem Umlegen des Hebels nicht von ihrer Montageendposition und kann einfach an dem Motorrad oder Motorroller fixiert werden.

Vorzugsweise ist die Gepäckbrücke so ausgebildet, dass das Positionierungselement von der Adapterplatte als ein Positionierhaken hervorsteht, der an seinem freien Ende ein Hakenteil aufweist. Dieses Hakenteil ist ausgebildet, eine erste zur Aufnahme des Hakenteils ausgebildete Fixierstelle an dem Motorrad zu hintergreifen und somit die Positionsfestlegung und Vorfixierung zu gewährleisten. Dabei ist günstig, dass das Hakenteil eine optimale Möglichkeit bietet, aufgrund der speziellen Ausformung die Gepäckbrücke in die Montageendposition zu führen und gleichzeitig sicher an der ersten Fixierstelle zu befestigen, da die Hakenform einem Abrutschen von dem Anlagepunkt des Motorrads oder des Motorrollers entgegenwirkt bzw. das Abrutschen nahezu ausschließt.

In einem vorteilhaften Ausführungsbeispiel der Erfindung ist vorgesehen, dass das Positionierungselement und das zumindest eine Einrastmittel einstückig an der Adapterplatte ausgebildet sind. Dadurch werden die Bauteilanzahl der Wartungsklappe und somit auch der Montageaufwand minimiert. Ferner begünstigt dies die Bauteilfestigkeit bei auftretenden Belastungen und minimiert das Spiel der Wartungsklappe in montiertem Zustand.

Ferner ist eine Ausführungsform günstig, bei der die Adapterplatte eine Adapteraussparung zur zumindest teilweise integrierten Aufnahme der Verschiebevorrichtung aufweist. Diese Adapteraussparung ermöglicht die Integration der Verschiebevorrichtung in die Adapterplatte und nutzt optimal den Bauraum und den Platz für die Befestigungsvorrichtung an dem Motorrad oder Motorroller.

In einer weiteren vorteilhaften Variante ist erfindungsgemäß vorgesehen, dass der Hebel zur Verlagerung des Eingriffselements unmittelbar oder mittelbar über ein Koppelelement an dem Eingriffselement angreift.

Die erfindungsgemäße Gepäckbrücke ist in einer Ausführungsvariante ausgebildet, dass das Eingriffselement zumindest zwei in einer zur Längsrichtung orthogonalen Querrichtung voneinander beabstandete Eingriffsstege umfasst, welche in der Schließstellung des Hebels zur Fixierung der Gepäckbrücke eine zweite Fixierstelle an dem Motorrad oder Motorroller hintergreifen. Die beiden Eingriffsstege sind eine sichere, platzsparende und einfache Methode die Gepäckbrücke an der zweiten Fixierstelle zu befestigen. Diese sind an die Geometrie der zweiten Fixierstelle angepasst und liegen in der Montageendposition direkt an der zweiten Fixierstelle an.

Weiter vorteilhaft ist es, wenn die Gepäckbrücke eine auf die Adapterplatte aufgesetzte Fixierplatte zur fixierten Aufnahme des Motorradgepäckstücks umfasst, die über Befestigungsmittel an der Adapterplatte befestigt ist. Mittels der Fixierplatte wird das Befestigen des Motorradgepäckstücks weiter verbessert. Die Fixierplatte kann genau an die Anforderung der Fixierung des Motorradgepäckstücks angepasst werden ohne Komponenten wie die Verschiebevorrichtung zur Fixierung der Gepäckbrücke an dem Motorrad oder Motorroller berücksichtigen zu müssen.

In einer Weiterbildung der vorliegenden Erfindung ist ferner vorgesehen, dass die Befestigungsmittel jeweils elastische Entkopplungselemente zur Dämpfung einer von der Adapterplatte auf die Fixierplatte übertragenen Kraft oder Vibration umfassen, die im montierten Zustand direkt an der Fixierplatte anliegen. Dies hat zur Folge, dass mittels der elastischen Entkopplungselemente Erschütterungen während der Fahrt mit dem Motorrad oder Motorroller oder sonstige von außen auf das Motorradgepäckstück wirkende Kräfte oder Vibrationen zu reduzieren. Die begünstigt den Halt der Gepäckbrücke an dem Motorrad oder Motorroller bzw. des Motorradgepäckstücks an der Gepäckbrücke und reduziert ferner das Auftreten von Bauteilschädigungen. Ferner ist besonders vorteilhaft, dass durch die entkoppelte Aufnahme die Pendelneigung des Motorrads bei hohen Geschwindigkeiten reduziert wird.

In einer bevorzugten Ausführungsform der Erfindung ist zwischen der Adapterplatte und dem Eingriffselement eine Gleitplatte angeordnet, an der das Eingriffselement bei einer Positionsveränderung des Hebels zwischen der Öffnungsstellung und der Schließstellung entlang gleitet. Mittels der Gleitplatte wird verhindert, dass die Verschiebevorrichtung direkt an der Adapterplatte entlang gleitet und dadurch eventuelle Bauteilschädigungen verhindert. Ferner bietet die Gleitplatte optimale Reibeigenschaften, wodurch das Gleiten der Verschiebevorrichtung begünstig wird.

Erfindungsgemäß ist vorgesehen, dass, wenn sich der Hebel außerhalb der Schließstellung befindet, der Hebel in einer zur Längs- und Querrichtung orthogonalen Vertikalrichtung über die Adapterplatte hinaus hervorsteht und eine Montage des Motorradgepäckstücks an der Adapterplatte blockiert.

Vorzugsweise ist die Gepäckbrücke so ausgebildet, dass, wenn sich der Hebel außerhalb der Schließstellung befindet, der Hebel in der Vertikalrichtung über die Fixierplatte hinaus hervorsteht und eine Montage des Motorradgepäckstücks an der Fixierplatte blockiert.

Dabei ist günstig, dass verhindert wird, dass der Fahrer des Motorrads oder Motorrollers losfährt und das Motorradgepäckstück nicht ordnungsgemäß an der Gepäckbrücke befestigt ist. Dies schließt einen Verlust des Motorradgepäckstücks aufgrund einer fehlerhaften Montage der Gepäckbrücke aus.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine perspektivische Aufsicht einer Gepäckbrücke,
- Fig. 2: eine perspektivische Aufsicht einer Gepäckbrücke mit demontierter Fixierplatte,
- Fig. 3: eine perspektivische Untersicht einer Gepäckbrücke.

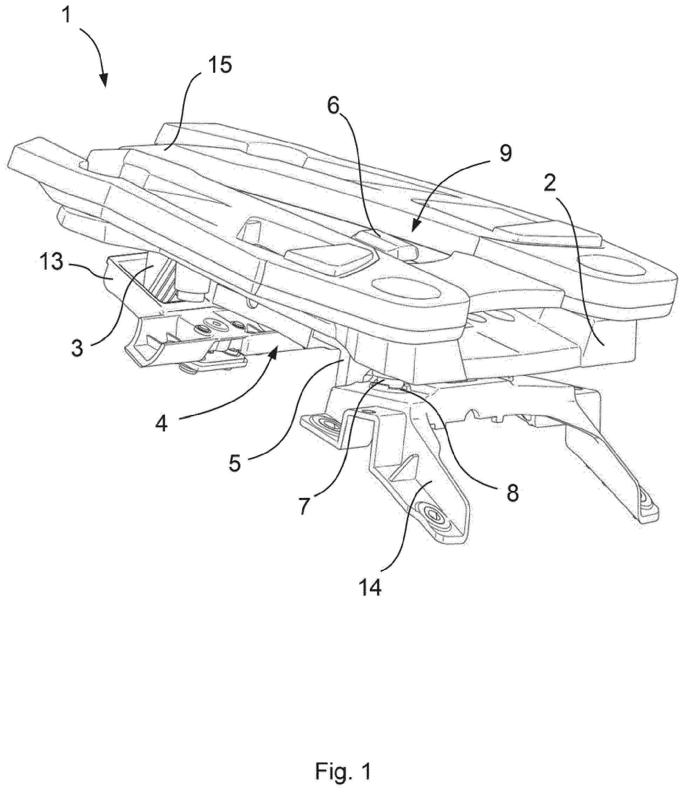

In Figur 1 ist eine perspektivische Ansicht einer Gepäckbrücke 1 zur befestigenden Aufnahme eines Motorradgepäckstücks für ein Motorrad oder einen Motorroller dargestellt. Die Gepäckbrücke 1 umfasst eine Adapterplatte 2, auf welcher das Motorradgepäckstück befestigbar ist. An der Adapterplatte 2 ist ein Positionierungselement 3 zur Positionsfestlegung und Vorfixierung der Gepäckbrücke 1 an einer ersten Fixierstelle 13 des Motorrads oder Motorrollers ausgebildet. Ferner weist die Adapterplatte 2 zwei Einrastmittel 7 auf, die in einer Längsrichtung, welche im bestimmungsgemäßen Gebrauch der Gepäckbrücke 1 einer Fahrtrichtung entspricht, von dem Positionierungselement 3 beabstandet angeordnet und zur Vorfixierung an einer zweiten Fixierstelle 14 ausgebildet sind. Die beiden Einrastmittel 7 sind mit korrespondierenden und an der zweiten Fixierstelle 14 angeordneten Aufnahmen 8 lösbar verrastet. Außerdem sind das Positionierungselement 3 und die beiden Einrastmittel 7 einstückig an der Adapterplatte 2 ausgebildet sind.

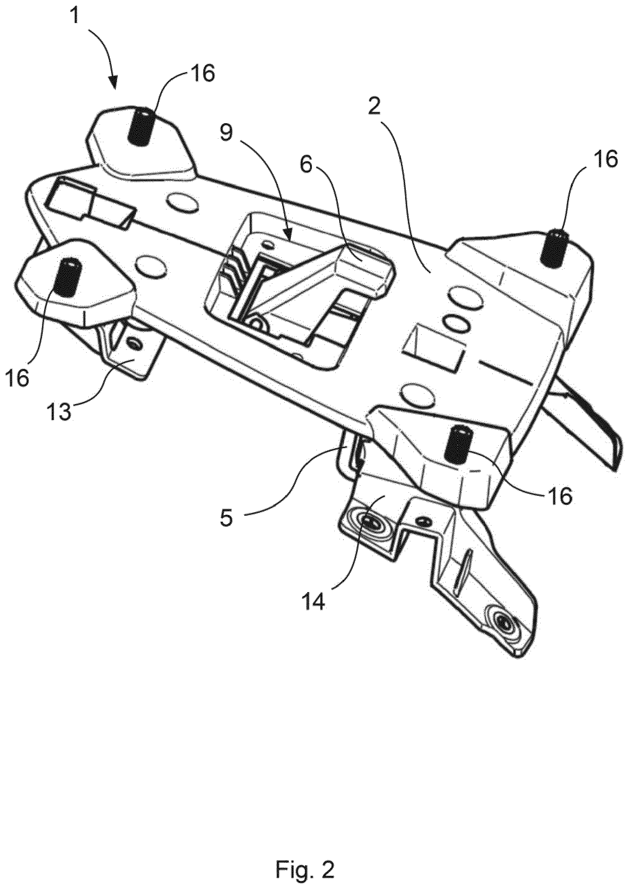

Ferner zeigt Figur 1 bzw. Fig. 2, dass die Adapterplatte 2 eine Adapteraussparung 9 zur teilweise integrierten Aufnahme einer Verschiebevorrichtung 4 aufweist. Die Verschiebevorrichtung 4 weist ein Eingriffselement 5 und einen mit dem Eingriffselement 5 zusammenwirkenden Hebel 6 auf. Der Hebel 6 ist zwischen einer Öffnungsstellung und einer Schließstellung verstellbar und befindet sich in der Schließstellung. Das Eingriffselement 5 befindet sich in einer befestigten Position an dem Motorrad oder dem Motorroller. Die dargestellte Gepäckbrücke 1 umfasst eine auf die Adapterplatte 2 aufgesetzte Fixierplatte 15 zur fixierten Aufnahme des Motorradgepäckstücks.

Figur 2 zeigt eine perspektivische Ansicht einer Gepäckbrücke 1 aus Figur 1 mit demontierter Fixierplatte. An der Adapterplatte 2 sind vier Befestigungsmittel 16 zur Fixierung einer Fixierplatte vorgesehen. Die Befestigungsmittel 16 umfassen jeweils elastische Entkopplungselemente zur Dämpfung einer von der Adapterplatte 2 auf die Fixierplatte 15 übertragenen Kraft oder Vibration. In einem montierten Zustand liegen die elastischen Entkopplungselemente direkt an einer Fixierplatte an.

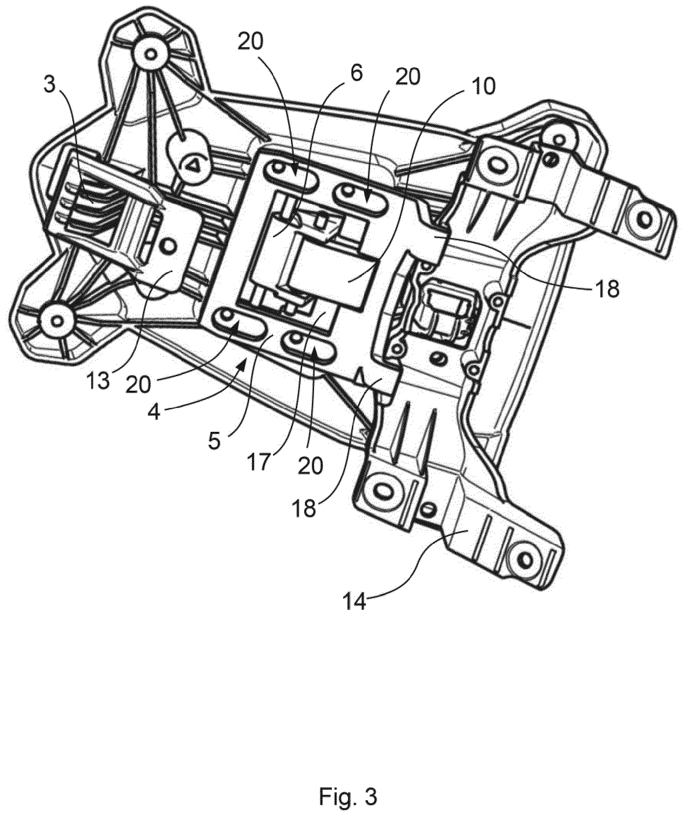

In Figur 3 ist eine perspektivische Untersicht einer Gepäckbrücke 1 gezeigt. Das Positionierungselement 3 steht von der Adapterplatte 2 als ein Positionierhaken hervor und weist an seinem freien Ende ein Hakenteil auf. Das Positionierungselement 3 hintergreift die erste Fixierstelle 13 an dem Motorrad oder Motorroller und gewährleistet somit die Positionsfestlegung und Vorfixierung. Der Hebel 6 der Verschiebevorrichtung 4 zur Verlagerung des Eingriffselements 5 ist mittelbar über ein Koppelelement 10 an dem Eingriffselement 5 verbunden. Dafür ist jeweils eine in einer zur Längsrichtung orthogonalen Querrichtung angeordnete Achse zwischen dem Hebel 6 und dem Koppelelement 10 und zwischen dem Koppelelement 10 und dem Eingriffselement 5 vorgesehen. Eine dritte Achse lagert den Hebel 6 an der Verschiebevorrichtung 4 bzw. der Adapterplatte 2. Das Eingriffselement 5 umfasst zwei in Querrichtung voneinander beabstandete Eingriffsstege 18, welche die zweite Fixierstelle 14 an dem Motorrad oder Motorroller zur Fixierung der Gepäckbrücke 1 hintergreifen, da sich der Hebel 6 in der Schließstellung befindet. Ferner ist zwischen der Adapterplatte 2 und dem Eingriffselement 5 eine Gleitplatte 17 angeordnet ist. Das Eingriffselement 5 gleitet bei einer Positionsveränderung des Hebels 6 zwischen der Öffnungsstellung und der Schließstellung an der Gleitplatte 17 entlang. Zur beweglichen Lagerung des Eingriffselements 5 an der Verschiebevorrichtung 4 sind vier Aussparungen 20 an dem Eingriffselement 5 vorgesehen, die sich in Längsrichtung (Fahrtrichtung) erstrecken. Über diese Aussparungen 20 wird das Eingriffselement 5 mittels Befestigungsmittel beweglich fixiert. Die Längserstreckung der Aussparungen 20 ermöglicht ein hin- und hergleiten des Eingriffselements 5 in Längsrichtung mittels Betätigung des Hebels 6.

## Patentansprüche

1. Gepäckbrücke (1) zur befestigenden Aufnahme eines Motorradgepäckstücks für ein Motorrad oder einen Motorroller mit einer Adapterplatte (2), auf welcher das Motorradgepäckstück befestigbar ist und die zumindest ein Positionierungselement (3) zur Positionsfestlegung und Vorfixierung der Gepäckbrücke (1) an dem Motorrad oder Motorroller aufweist, und einer Verschiebevorrichtung (4), die ein Eingriffselement (5) und einen mit dem Eingriffselement (5) zusammenwirkenden Hebel (6) aufweist, wobei der Hebel (6) zwischen einer Öffnungsstellung und einer Schließstellung verstellbar ist und dabei das Eingriffselement (5) zwischen einer von dem Motorrad oder dem Motorroller gelösten und einer an dem Motorrad oder dem Motorroller befestigten Position verlagert, **dadurch gekennzeichnet, dass**, wenn sich der Hebel (6) außerhalb der Schließstellung befindet, der Hebel (6) in einer zur Längs- und Querrichtung orthogonalen Vertikalrichtung über die Adapterplatte (2) hinaus hervorsteht und eine Montage des Motorradgepäckstücks an der Adapterplatte (2) blockiert.

2. Gepäckbrücke (1) gemäß Anspruch 1, wobei die Adapterplatte (2) zumindest ein Einrastmittel (7) aufweist, das in einer Längsrichtung, welche im bestimmungsgemäßen Gebrauch der Gepäckbrücke (1) einer Fahrtrichtung entspricht, von dem Positionierungselement (3) beabstandet angeordnet ist, wobei das zumindest eine Einrastmittel (7) ausgebildet ist, mit einer korrespondierenden und an dem Motorrad oder Motorroller angeordneten Aufnahme (8) zur Vorfixierung lösbar zu verrasten.

3. Gepäckbrücke (1) gemäß einem der Ansprüche 1 oder 2, wobei das Positionierungselement (3) von der Adapterplatte (2) als ein Positionierhaken hervorsteht, der an seinem freien Ende ein Hakenteil aufweist, das ausgebildet ist, eine erste Fixierstelle (13) an dem Motorrad oder Motorroller zu hintergreifen und somit die Positionsfestlegung und Vorfixierung zu gewährleisten.

4. Gepäckbrücke (1) gemäß Anspruch 2 oder den Ansprüchen 2 und 3, wobei das Positionierungselement (3) und das zumindest eine Einrastmittel (7) einstückig an der Adapterplatte (2) ausgebildet sind.

5. Gepäckbrücke (1) gemäß einem der vorherigen Ansprüche, wobei die Adapterplatte (2) eine Adapteraussparung (9) zur zumindest teilweise integrierten Aufnahme der Verschiebevorrichtung (4) aufweist.

6. Gepäckbrücke (1) gemäß einem der vorherigen Ansprüche, wobei der Hebel (6) zur Verlagerung des Eingriffselements (5) unmittelbar oder mittelbar über ein Koppelelement (10) an dem Eingriffselement (5) angreift.

7. Gepäckbrücke (1) gemäß einem der vorherigen Ansprüche, wobei das Eingriffselement (5) zumindest zwei in einer zur Längsrichtung orthogonalen Querrichtung voneinander beabstandete Eingriffsstege (18) umfasst, welche in der Schließstellung des Hebels (6) zur Fixierung der Gepäckbrücke (1) eine zweite Fixierstelle (14) an dem Motorrad oder Motorroller hintergreifen.

8. Gepäckbrücke (1) gemäß einem der vorherigen Ansprüche, wobei die Gepäckbrücke (1) eine auf die Adapterplatte (2) aufgesetzte Fixierplatte (15) zur fixierten Aufnahme des Motorradgepäckstücks umfasst, die über Befestigungsmittel (16) an der Adapterplatte (2) befestigt ist.

9. Gepäckbrücke (1) gemäß Anspruch 8, wobei die Befestigungsmittel (16) jeweils elastische Entkopplungselemente zur Dämpfung einer von der Adapterplatte (2) auf die Fixierplatte (15) übertragenen Kraft oder Vibration umfassen, die im montierten Zustand direkt an der Fixierplatte (15) anliegen.

10. Gepäckbrücke (1) gemäß einem der vorherigen Ansprüche, wobei zwischen der Adapterplatte (2) und dem Eingriffselement (5) eine Gleitplatte (17) angeordnet ist, an der das Eingriffselement (5) bei einer Positionsveränderung des Hebels (6) zwischen der Öffnungsstellung und der Schließstellung entlang gleitet.

11. Gepäckbrücke (1) gemäß Anspruch 8 oder 9, **dadurch gekennzeichnet, dass**, wenn sich der Hebel (6) außerhalb der Schließstellung befindet, der Hebel (6) in der Vertikalrichtung über die Fixierplatte (15) hinaus hervorsteht und eine Montage des Motorradgepäckstücks an der Fixierplatte (15) blockiert.

## Claims

1. Luggage rack (1) for securing a motorcycle luggage item for a motorcycle or a scooter with an adapter plate (2), on which the motorcycle luggage item can be fastened and which has at least one positioning element (3) for defining the position of and prefixing the luggage rack (1) on the motorcycle or scooter, and with a displacement apparatus (4) which has an engagement element (5) and a lever (6) which interacts with the engagement element (5), the lever (6) being adjustable between an open position and a locked position and in the process moving the engagement element (5) between a position, in which it is released from the motorcycle or the scooter, and a position, in which it is fastened to the motorcycle or scooter, **characterized in that**, when the lever (6) is situated outside the locked position, the lever (6) projects beyond the adapter plate (2) in a vertical direction which is orthogonal with respect to the longitudinal and transverse direction, and blocks mounting of the motorcycle luggage item on the adapter plate (2).

2. Luggage rack (1) according to Claim 1, the adapter plate (2) having at least one latching means (7) which is arranged spaced apart from the positioning element (3) in a longitudinal direction which corresponds to a direction of travel during proper use of the luggage rack (1), the at least one latching means (7) being configured to latch releasably for prefixing purposes to a corresponding receptacle (8) arranged on the motorcycle or scooter.

3. Luggage rack (1) according to either of Claims 1 or 2, the positioning element (3) projecting from the adapter plate (2) as a positioning hook which, at its free end, has a hook part which is configured to engage behind a first fixing point (13) on the motorcycle or scooter, and therefore to ensure the positional fastening and prefixing.

4. Luggage rack (1) according to Claim 2 or Claims 2 and 3, the positioning element (3) and the at least one latching means (7) being configured in one piece on the adapter plate (2).

5. Luggage rack (1) according to one of the preceding claims, the adapter plate (2) having an adapter cut-out (9) for the at least partially integrated receiving of the displacement apparatus (4).

6. Luggage rack (1) according to one of the preceding claims, the lever (6) acting on the engagement element (5) directly or indirectly via a coupling element (10) in order to move the engagement element (5).

7. Luggage rack (1) according to one of the preceding claims, the engagement element (5) comprising at least two engagement webs (18) which are spaced apart from one another in a transverse direction orthogonal with respect to the longitudinal direction and, in the locked position of the lever (6), engage behind a second fixing point (14) on the motorcycle or the scooter in order to fix the luggage rack (1).

8. Luggage rack (1) according to one of the preceding claims, the luggage rack (1) comprising a fixing plate (15) which is placed onto the adapter plate (2) in order to fixedly receive the motorcycle luggage item, which fixing plate (15) is fastened via fastening means (16) to the adapter plate (2).

9. Luggage rack (1) according to Claim 8, the fastening means (16) in each case comprising elastic decoupling elements for damping a force or vibration which is transmitted from the adapter plate (2) to the fixing plate (15), which decoupling elements bear directly against the fixing plate (15) in the mounted state.

10. Luggage rack (1) according to one of the preceding claims, a sliding plate (17) being arranged between the adapter plate (2) and the engagement element (5), along which sliding plate (17) the engagement element (5) slides during a positional change of the lever (6) between the open and the locked position.

11. Luggage rack (1) according to Claim 8 or 9, **characterized in that**, when the lever (6) is situated outside the locked position, the lever (6) projects beyond the fixing plate (15) in the vertical direction and blocks mounting of the motorcycle luggage item on the fixing plate (15).

## Revendications

1. Porte-bagage (1) pour recevoir par fixation un bagage de motocyclette pour une motocyclette ou un scooter avec une plaque d'adaptation (2), sur laquelle le bagage de motocyclette peut être fixé et qui présente au moins un élément de positionnement (3) pour l'immobilisation en position et la préfixation du porte-bagage (1) sur la motocyclette ou le scooter, et un dispositif de coulissement (4) qui présente un élément d'engagement (5) et un levier (6) coopérant avec l'élément d'engagement (5), le levier (6) pouvant être réglé entre une position d'ouverture et une position de fermeture, et l'élément d'engagement (5) étant ainsi déplacé entre une position détachée de la motocyclette ou du scooter et une position fixée à la motocyclette ou au scooter, **caractérisé en ce que**, lorsque le levier (6) se trouve en dehors de la position de fermeture, le levier (6) fait saillie au-delà de la plaque d'adaptation (2) dans une direction verticale orthogonale aux directions longitudinale et transversale et bloque le montage du bagage de motocyclette sur la plaque d'adaptation (2).

2. Porte-bagage (1) selon la revendication 1, dans lequel la plaque d'adaptation (2) présente au moins un moyen d'encliquetage (7) qui est agencé à distance de l'élément de positionnement (3) dans une direction longitudinale qui correspond à une direction de marche dans l'utilisation prévue du porte-bagage (1), l'au moins un moyen d'encliquetage (7) étant configuré pour s'encliqueter de manière amovible avec un réceptacle correspondant (8) et agencé sur la motocyclette ou le scooter pour la préfixation.

3. Porte-bagage (1) selon l'une quelconque des revendications 1 ou 2, dans lequel l'élément de positionnement (3) fait saillie de la plaque d'adaptation (2) sous la forme d'un crochet de positionnement qui présente à son extrémité libre une partie de crochet configurée pour s'engager derrière un premier point de fixation (13) sur la motocyclette ou le scooter et assurer ainsi l'immobilisation en position et la préfixation.

4. Porte-bagage (1) selon la revendication 2 ou les revendications 2 et 3, dans lequel l'élément de positionnement (3) et l'au moins un moyen d'encliquetage (7) sont configurés d'un seul tenant sur la plaque d'adaptation (2).

5. Porte-bagage (1) selon l'une quelconque des revendications précédentes, dans lequel la plaque d'adaptation (2) présente un évidement d'adaptation (9) pour la réception au moins partiellement intégrée du dispositif de coulissement (4).

6. Porte-bagage (1) selon l'une quelconque des revendications précédentes, dans lequel le levier (6) pour le déplacement de l'élément d'engagement (5) agit directement ou indirectement par l'intermédiaire d'un élément de couplage (10) sur l'élément d'engagement (5).

7. Porte-bagage (1) selon l'une quelconque des revendications précédentes, dans lequel l'élément d'engagement (5) comprend au moins deux nervures d'engagement (18) espacées l'une de l'autre dans une direction transversale orthogonale à la direction longitudinale, qui, dans la position de fermeture du levier (6), pour la fixation du porte-bagage (1), s'engagent derrière un deuxième point de fixation (14) sur la motocyclette ou le scooter.

8. Porte-bagage (1) selon l'une quelconque des revendications précédentes, dans lequel le porte-bagage (1) comprend une plaque de fixation (15) placée sur la plaque d'adaptation (2) pour la réception fixée du bagage de motocyclette, qui est fixée à la plaque d'adaptation (2) par l'intermédiaire de moyens de fixation (16).

9. Porte-bagage (1) selon la revendication 8, dans lequel les moyens de fixation (16) comprennent chacun des éléments de découplage élastiques pour amortir une force ou une vibration transmise par la plaque d'adaptation (2) à la plaque de fixation (15), qui, à l'état monté, s'appliquent directement contre la plaque de fixation (15) .

10. Porte-bagage (1) selon l'une quelconque des revendications précédentes, dans lequel une plaque de glissement (17) est agencée entre la plaque d'adaptation (2) et l'élément d'engagement (5), le long de laquelle l'élément d'engagement (5) glisse lors d'un changement de position du levier (6) entre la position d'ouverture et la position de fermeture.

11. Porte-bagage (1) selon la revendication 8 ou 9, **caractérisé en ce que**, lorsque le levier (6) se trouve en dehors de la position de fermeture, le levier (6) fait saillie au-delà de la plaque de fixation (15) dans la direction verticale et bloque un montage du bagage de motocyclette sur la plaque de fixation (15).
